Europäisches Patentamt

European Patent Office

Office européen des brevets

(19)

(11) **EP 0 729 686 B1**

(12) **EUROPÄISCHE PATENTSCHRIFT**

(45) Veröffentlichungstag und Bekanntmachung des Hinweises auf die Patenterteilung:
**14.04.1999 Patentblatt 1999/15**

(21) Anmeldenummer: **95927942.3**

(22) Anmeldetag: **30.08.1995**

(51) Int Cl.⁶: **H04N 5/202**

(86) Internationale Anmeldenummer:
**PCT/IB95/00717**

(87) Internationale Veröffentlichungsnummer:
**WO 96/08920 (21.03.1996 Gazette 1996/13)**

(54) **SCHALTUNGSANORDNUNGEN UND VERFAHREN ZUR ANSTEUERUNG EINER BILDRÖHRE**

CIRCUITS AND METHODS FOR DRIVING A PICTURE TUBE

CIRCUITS ET METHODES D'EXCITATION D'UN TUBE-IMAGE

(84) Benannte Vertragsstaaten:
**DE FR GB**

(30) Priorität: **15.09.1994 DE 4432844**

(43) Veröffentlichungstag der Anmeldung:
**04.09.1996 Patentblatt 1996/36**

(73) Patentinhaber:
• **Koninklijke Philips Electronics N.V.
5621 BA Eindhoven (NL)**
Benannte Vertragsstaaten:
**DE FR GB**
• **Philips Patentverwaltung GmbH
22335 Hamburg (DE)**
Benannte Vertragsstaaten:
**DE**

(72) Erfinder:
• **PETERS, Matthias
D-21629 Neu Wulmsdorf (DE)**

• **BRUN, Christian
D-21335 Lüneburg (DE)**

(74) Vertreter: **von Laue, Hanns-Ulrich, Dipl.-Ing. et al
Philips Patentverwaltung GmbH,
Röntgenstrasse 24
22335 Hamburg (DE)**

(56) Entgegenhaltungen:
**EP-A- 0 206 419          EP-A- 0 383 968
FR-A- 2 656 484**

• **IEEE TRANSACTIONS ON CONSUMER ELECTRONICS, Bd. 36, Nr. 3, 1.August 1990 Seiten 712-721, XP 000162911 MARICOURT F ET AL 'HIGH VOLTAGE 20 MHZ VIDEO AMPLIFIER FOR IDTV SETS'**

## Beschreibung

Die Erfindung betrifft Schaltungsanordnungen und Verfahren zur Ansteuerung einer Bildröhre mit nichtlinearer Spannungs-/Strom-Kennlinie mit einem Bildsignal, das zur Kompensation der nichtlinearen Kennlinie der Bildröhre vorentzerrt ist oder das linear ist.

Die nach dem Stande der Technik bekannten Schaltungsanordnungen zur Ansteuerung von Bildröhren setzen eine Spannungssteuerung ein, d.h. der Strahlstrom der Bildröhre wird durch eine Spannung zwischen Kathode und Gitter 1 der Bildröhre erzeugt. Aus diesem Grunde ist eine Vorentzerrung des Signals erforderlich, da der Strahlstrom und damit die Bildhelligkeit nichtlinear mit der Ansteuerspannung zusammenhängt. Der Hauptnachteil dieser Schaltungsanordnungen liegt darin, daß sie über einen Spannungsbereich von etwa 100 V an der Kathode mit einer Bandbreite von beispielsweise 8 MHz für einen 50 Hz Empfänger mit 4:3 Format arbeiten müssen. Für einen 100 Hz Fernsehempfänger ist bereits eine Bandbreite von 16 MHz erforderlich; für Geräte mit einem 16:9 Bildseitenverhältnis ist eine weitere Erhöhung der Bandbreite erforderlich. Bei einer Spannungsansteuerung von Bildröhren besteht ferner der Nachteil, daß der vorzuhaltende Ausgangsspannungsbereich des RGB-Prozessors groß sein muß. Damit werden diese Ansteuerschaltungen sehr aufwendig. Ein weiterer Nachteil dieser Schaltungen besteht darin, daß sie aufgrund des nichtlinearen Zusammenhangs zwischen Strahlstrom und Ansteuerspannung nicht ohne Korrektur lineare RGB-Signale darstellen können, die z.B. aus einem Computer, einem D/A-Umsetzer oder zur Darstellung von im Fernseher erzeugten Bildmenüs geeignet sind.

Es ist Aufgabe der Erfindung, eine einfach aufgebaute Schaltungsanordnung zur Ansteuerung von Bildröhren anzugeben, die Bildsignale mit großer Bandbreite verarbeiten kann.

Diese Aufgabe ist für eine erste Ausführungsform der Erfindung dadurch gelöst, daß das Bildsignal einer nichtlinearen Kompensationsschaltung zugeführt wird, die die Vorentzerrung des Bildsignals rückgängig macht und die ausgangsseitig eine gesteuerte Stromquelle ansteuert, deren Ausgang mit der Kathode der Bildröhre gekoppelt ist, und daß ein Differenzierer vorgesehen ist, der das Bildsignal differenziert und eine gesteuerte Kompensations-Stromquelle ansteuert, die zur bildsignalabhängigen Umladung der parasitären Eingangskapazität der Bildröhre mit deren Kathode gekoppelt ist.

Wie bereits eingangs erwähnt, sind die heute von den Fernsehanstalten ausgestrahlten Fernsehsignale im allgemein nichtlinear vorentzerrt. Diese Vorentzerrung ist so ausgelegt, daß sie bei einer Spannungsansteuerung der Bildröhre das nichtlineare Verhältnis zwischen der angelegten Spannung und dem Strahlstrom gerade kompensiert, so daß sich in der Darstellung des Bildes auf der Bildröhre wieder ein lineares Verhalten der Bildhelligkeit ergibt.

Für Bildsignale, die in dieser Weise vorentzerrt sind, wird in der erfindungsgemäßen Schaltungsanordnung, die eine Stromsteuerung der Bildröhre einsetzt, mittels einer nichtlinearen Kompensationsschaltung die Vorentzerrung rückgänging gemacht. Die nichtlineare Kennlinie dieser Kompensationsschaltung ist dabei genau entgegengesetzt derjenigen der senderseitig vorgenommenen Vorentzerrung. Damit ist am Ausgang dieser Kompensationsschaltung wieder ein lineares Bildsignal vorhanden. Mittels dieses linearen Bildsignals wird eine gesteuerte Stromquelle angesteuert, die ausgangsseitig in Abhängigkeit dieses Signals (lineare Abhängigkeit) auf die Kathode der Bildröhre einen entsprechenden Strom koppelt. Da hier unmittelbar ein Strom eingespeist wird, ist auch die Bildhelligkeit linear, da die Bildhelligkeit unmittelbar von dem Strom in linearer Weise abhängt.

Hierbei ist jedoch zu berücksichtigen, daß die Bildröhre eine parasitäre Eingangskapazität aufweist, die durch die Bildröhre selbst, aber gegebenenfalls auch durch eine externe Verschaltung zwischen Bildröhre und der erfindungsgemäßen Schaltungsanordnung entstehen kann. Mit jeder Änderung der Bildhelligkeit muß diese Kapazität umgeladen werden. Dazu ist eine spannungsgesteuerte Kompensations-Stromquelle vorgesehen, der eingangsseitig das mittels eines Differenzierers differenzierte Bildsignal zugeführt wird. Ausgangsseitig liefert diese Kompensations-Stromquelle Lade- bzw. Entladeströme für die parasitäre Eingangskapazität der Bildröhre, die ein schnelles Umladen dieser Kapazität in Abhängigkeit des Bildsignals bewerkstelligen.

Der Hauptvorteil der erfindungsgemäßen Schaltungsanordnung besteht darin, daß sie insbesondere geeignet ist, den Ansprüchen an die Bandbreite derartiger Schaltungsanordnungen zu genügen. Sie ist insbesondere auch für Fernseher mit einem 16:9 Bildseitenverhältnis geeignet, dies selbst dann, wenn diese mit 100 Hz Teilbildfrequenz und möglicherweise sogar erhöhter Bildzeilenzahl und damit Horizontalfrequenz arbeiten. Die Schaltungsanordnung weist einen einfachen Aufbau auf und gewährleistet durch die recht genau nachbildbare elektronische Rückgängigmachung der Vorentzerrung des Bildsignals mittels der nichtlinearen Kompensationsschaltung einen recht präzisen linearen Helligkeitsverlauf des dargestellten Bildes. Ein weiterer Vorteil besteht darin, daß eine sogenannte Sperrpunktregelung für die Bildröhre, die mittels in die vertikalaustastlücke eingespeister Meßzeilen vorgenommen wird, nicht mehr erforderlich ist. Dieser Vorteil fällt insbesondere für die Formatumschaltung von einem Bildseitenverhältnis von 4:3 auf 16:9 bei einer 4:3 Bildröhre ins Gewicht, da bei einer derartigen Bildröhre diese Meßzeilen dann sichtbar würden.

Für lineare Bildsignale, also nicht vorentzerrte Bildsignale ist gemäß einer zweiten Ausführungsform der Erfindung vorgesehen, daß das Bildsignal einer gesteuerten Stromquelle zugeführt wird, die ausgangsseitig mit der Kathode der Bildröhre gekoppelt ist, und daß das Bildsignal einer nichtlinearen Vorentzerrungsschaltung zugeführt wird, die eine Vorentzerrung des Bildsignals mit einer nichtlinearen Kennlinie vornimmt, die die Nichtlinearität der Bildröhre kompensiert, und deren Ausgangs.signal auf einen Differenzierer geführt ist, der eine gesteuerte Kompensations-Stromquelle ansteuert, die ausgangsseitig zur bildsignalabhängigen Umladung der parasitären Eingangskapazität der Bildröhre mit deren Kathode gekoppelt ist.

Bei einem nicht vorentzerrten Bildsignal, das also eine lineare Abhängigkeit zwischen Spannung und Bildhelligkeit aufweist, kann dieses Bildsignal bei der erfindungsgemäßen Schaltungsanordnung, die eine Stromsteuerung der Bildröhre einsetzt, in dieser linearen Form dazu eingesetzt werden, eine Stromquelle zu steuern, die ausgangsseitig einen vom Bildsignal abhängigen Strom der Kathode der Bildröhre aufprägt. Damit ist auch bei der Ansteuerung der Bildröhre weiterhin ein lineares Verhalten gewährleistet, da die Helligkeit in der Darstellung der Bildröhre unmittelbar und in linearer Weise von dem Kathodenstrom abhängig ist.

Auch hier ist eine Umladung der parasitären Eingangskapazität der Bildröhre in Abhängigkeit des Bildsignals erforderlich. Wegen der nichtlinearen Spannungs-/Strom-Kennlinie der Bildröhre ist hierbei jedoch eine Abhängigkeit dieser Umladung von einem nichtlinearen Bildsignal entsprechend der nichtlinearen Kennlinie der Bildröhre erforderlich. Daher wird das Bildsignal einer nichtlinearen Vorentzerrungsschaltung zugeführt, die eine solche Vorentzerrung des Bildsignals vornimmt, daß diese die Nichtlinearität der Bildröhre gerade kompensieren würde. Dieses Signal wird jedoch nicht zur unmittelbaren Ansteuerung der Bildröhre mittels des Bildsignals eingesetzt, sondern dient dazu, die bildsignalabhängige Umladung entsprechend der nichtlinearen Kennlinie der Bildröhre vorzunehmen. Dazu wird das Ausgangssignal dieser Vorentzerrungsschaltung auf einen Differenzierer geführt, der seinerseits eine gesteuerte Kompensations-Stromquelle ansteuert, deren Ausgang mit der Kathode der Bildröhre verbunden ist. Das Ausgangssignal, das diese Kompensations-Stromquelle liefert, dient ausschließlich dazu, die Umladung der parasitären Eingangskapazität der Bildröhre in Abhängigkeit des Bildsignals vorzunehmen, so daß Sprünge in der Bildhelligkeit, die eine entsprechend schnelle Umladung dieser Eingangskapazität erfordern, tatsächlich unverfälscht auf der Bildröhre dargestellt werden können. Die dazu erforderlichen Umladeströme für die Eingangskapazität liefert diese Kompensations-Stromquelle.

Die Vorteile der Schaltungsanordnung gemäß der zweiten Ausführungsform decken sich im wesentlichen mit denen der Schaltung gemäß der ersten Ausführungsform. Ein lineares Bildsignal kann hier unmittelbar zur Ansteuerung einer gesteuerten Stromquelle genutzt werden, die ihrerseits der Kathode der Bildröhre einen bildsignalabhängigen Strom aufprägt. Damit ist eine unverzerrte Darstellung des linearen Bildsignals gewährleistet.

Gemäß einer Ausgestaltung der Erfindung ist für die erste Ausführungsform vorgesehen, daß die Kompensationsschaltung eine Stufe mit nichtlinearer Kennlinie aufweist, die aus einem Eingangssignal x ein Ausgangssignal y gemäß der Gleichung

$$y = x^{\gamma}$$

generiert, wobei $\gamma$ die Nichtlinearität der Spannungs-/Strom-Kennlinie der Bildröhre gemäß der Gleichung

$$U_{kath} = U_{sperr} - (K_1 \cdot I_{STR})^{\frac{1}{\gamma}}$$

angibt, worin $U_{sperr}$ die Sperrspannung der Bildröhre, $U_{kath}$ die Kathodenspannung, $I_{STR}$ der Strahlstrom und $K_1$ ein von der Bildröhre abhängiger konstanter Faktor sind.

Die Nichtlinearität wird dann im Sprachgebrauch im allgemeinen nur noch als Gamma bezeichnet. Zur Rückgängigmachung dieser Abhängigkeit arbeitet die Kompensationsschaltung mit einer nichtlinearen Kennlinie gemäß der Gleichung

$$y = x^{\gamma},$$

wodurch die Nichtlinearität, die dem Bildsignal zur Kompensation der Spannungs-/Strom-Kennlinie der Bildröhre aufgeprägt wurde, rückgängig gemacht wird.

Umgekehrtes ist für die Vorentzerrungsschaltung der Schaltungsanordnung gemäß der zweiten Ausführungsform der Erfindung erforderlich, hier ist für die bildsignalabhängige Erzeugung eines Kompensations-Stromes für die Umladung der parasitären Eingangskapazität der Bildröhre gerade eine Vorentzerrung erforderlich, wie sie im allgemeinen senderseitig vorgenommen wird. Für diesen Fall ist gemäß einer weiteren Ausgestaltung der Erfindung vorgesehen, daß die Vorentzerrungsschaltung eine Stufe mit nichtlinearer Kennlinie aufweist, die aus einem Eingangssignal x ein Ausgangssignal y gemäß der Gleichung

$$y = x^{1/\gamma}$$

generiert, wobei $\gamma$ die Nichtlinearität der Spannungs-/Strom-Kennlinie der Bildröhre gemäß der Gleichung

$$U_{kath}=U_{sperr} - (K_1 \cdot I_{STR})^{\frac{1}{\gamma}}$$

angibt, worin $U_{sperr}$ die Sperrspannung der Bildröhre, $U_{kath}$ die Kathodenspannung, $I_{STR}$ der Strahlstrom und $K_1$ ein von der Bildröhre abhängiger konstanter Faktor sind.

In beiden Ausführungsformen wird für die Kompensations-Stromquelle ein ideales Verhalten angenommen, d.h. diese Stromquelle muß in der Lage sein, Ströme beider Polaritäten zu liefern. Sie muß also in der Lage sein, die parasitäre Eingangskapazität der Bildröhre sowohl zu laden wie auch zu entladen. Da reale Stromquellen dieses ideale Verhalten nicht aufweisen, kann diese zunächst ideal angenommene Kompensations-Stromquelle beispielsweise aus zwei Stromquellen aufgebaut sein, die beide ausgangsseitig auf die Kathode der Bildröhre arbeiten. Eine der Stromquellen arbeitet gegen ein positives, die andere gegen ein negatives Potential bzw. Bezugspotential. Wenigstens eine der beiden Stromquellen muß dabei in Abhängigkeit des Ausgangssignals des Differenzierers steuerbar sein. Tritt keine Änderung des Bildsignalinhalts auf, liefern beide Stromquellen den gleichen Strom, so daß die Ladung der Eingangskapazität der Bildröhre nicht verändert wird. Bei sich änderndem Bildinhalt liefert jedoch eine Stromquelle einen größeren oder kleineren Strom als die andere, so daß sich die Ströme der Stromquellen nicht aufheben und ein Teil des Stromes durch die Kapazität fließt, so daß diese in gewünschter Weise umgeladen wird.

Anhand der Zeichnung werden einige Ausführungsbeispiele der Erfindung näher erläutert. Es zeigen:

**Fig. 1** ein schematisches Blockschaltbild einer Schaltungsanordnung gemäß der ersten Ausführungsform der Erfindung,

**Fig. 2** ein schematisches Blockschaltbild einer Schaltungsanordnung gemäß der zweiten Ausführungsform der Erfindung und

**Fig. 3** ein Blockschaltbild entsprechend Fig. 2, in dem die ideal angenommene Kompensations-Stromquelle durch zwei Stromquellen realisiert ist.

Bevor näher auf die drei Ausführungsformen der Erfindung gemäß den drei Figuren eingegangen wird, soll im folgenden eine theoretische Berechnung zeigen, welche Eigenschaften die erfindungsgemäße Schaltungsanordnung aufweisen muß, insbesondere im Hinblick auf die nichtlineare Spannungs-/Strom-Kennlinie der Bildröhre. Der Eingangsanschluß, also die Kathode der Bildröhre, weist eine parasitäre Kapazität $C_{par}$ auf. Für eine beliebige Zeitfunktion für einen Strahlstrom $i_0(t)$ ergibt sich für den Strom folgende Beziehung:

$$iC_{par}(t)=C_{par}\cdot\frac{du_K(t)}{dt} \qquad (1)$$

worin $u_K(t)$ die Kathodenspannung der Bildröhre ist.

Aus der Kennlinie einer Bildröhre läßt sich ableiten:

$$I_{STR} =\frac{(U_{sperr \, - \, UKat})^{\gamma}}{K_I} ,$$

worin $U_{sperr}$ die Sperrspannung der Kathode und $K_1$ ein konstanter Faktor ist, der abhängig von der Kennlinie der Bildröhre ist. Aus dieser Gleichung läßt sich für die Kathodenspannung $U_{kath}$ gewinnen:

$$U_{kath}=U_{sperr} - (K_1 \cdot I_{STR})^{1/\gamma}$$

Dabei wird $\gamma$ im allgemeinen als Kennwert für diese Nichtlinearität angegeben. Damit ergibt sich für die Kathodenspannung folgende Abhängigkeit:

$$U_k(t)=f(i_0[t])=U_{blk} - (K_1 \cdot i_0[t])^{\frac{1}{\gamma}} \qquad (2),$$

worin $U_{blk}$ die Kathoden-Sperrspannung, $i_0[t]$ die Zeitfunktion des Strahlstroms $K_1$ ein konstanter Faktor ist, der von der Kennlinie der Bildröhre abhängt.

Differenziert man die Gleichung (2) nach der Zeit ergibt sich:

$$\frac{du_K(t)}{dt} = - \frac{1}{\gamma} \cdot K_1^{\frac{1}{\gamma}} \cdot i_0(t)^{\frac{1}{\gamma}-1)} \cdot \frac{di_0(t)}{dt} \qquad (3).$$

Durch Einsetzen dieser Beziehung in Gleichung (1) ergibt sich schließlich:

$$ic_{par}(t) = - C_{par} \cdot \frac{1}{\gamma} \cdot K_1^{\frac{1}{\gamma}} \cdot i_0(t)^{(\frac{1}{\gamma}-1)} \cdot \frac{di_0(t)}{dt} \qquad (4)$$

Dieser Strom muß erzeugt werden, um die Einflüsse der parasitären Eingangskapazität der Bildröhre zu kompensieren und damit eine direkte Steuerung des Strahlstromes auch für hohe Frequenzen vornehmen zu können.
Um diesen Strom zur Umladung der parasitären Eingangskapazität der Bildröhre liefern zu können, muß die erfindungsgemäße Schaltungsanordnung einen Kompensationsstrom $i_{Komp}$ (t) liefern:

$$i_{Komp} (t)= K_2 \cdot C_{Komp} \cdot \frac{1}{\gamma} \cdot u_1(t)^{(\frac{1}{\gamma}-1)} \cdot \frac{du_1(t)}{dt} \qquad (5).$$

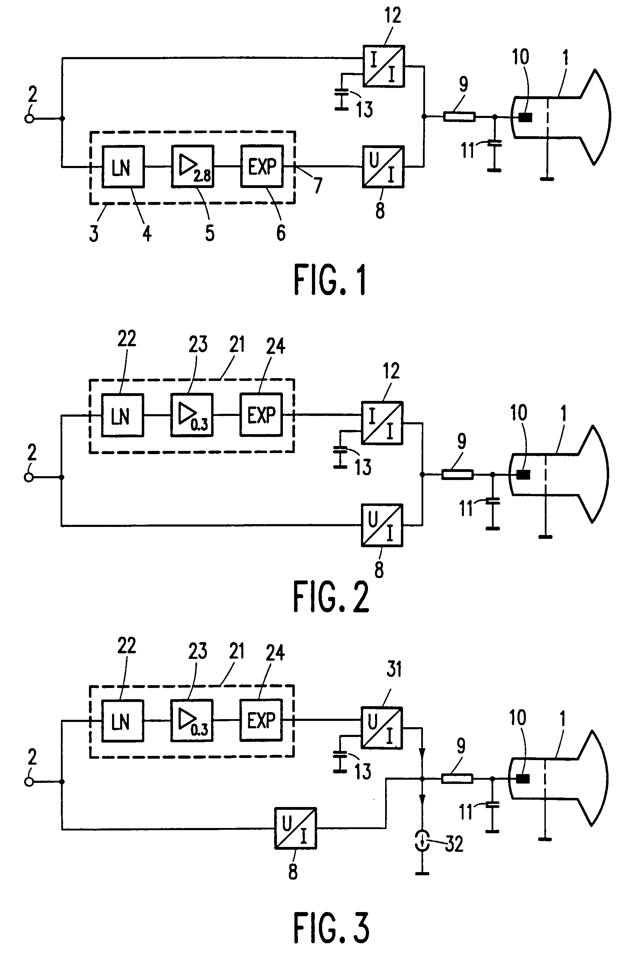

Diese Gleichung zeigt, daß grundsätzlich eine Stufe mit einer nichtlinearen Kennlinie $y = x^{1/\gamma}$, ein Differenzierer mit einer Kapazität $C_{Komp}$ sowie ein Verstärker mit einem Verstärkungsfaktor $K_2$ erforderlich sind. Diese Elemente zeigen sich im folgenden in den Schaltungsanordnungen gemäß den Fig. 1 bis 3.
In Fig. 1 ist ein schematisches Blockschaltbild einer Schaltungsanordnung gemäß der ersten Ausführungsform der Erfindung dargestellt. Die Figur zeigt schematisch eine Bildröhre 1, auf der ein dem Eingang der Schaltungsanordnung 2 zugeführtes Bildsignal dargestellt werden soll. In dem Beispielsfalle gemäß Fig. 1 wird davon ausgegangen, daß es sich um ein Bildsignal handelt, das zur Kompensation der nichtlinearen Spannungs-/Strom-Kennlinie der Bildröhre vorentzerrt ist. Dies ist bei praktisch allen von Senderanstalten abgestrahlten Fernsehsignalen der Fall.
Da das Bildsignal vorentzerrt ist, und die erfindungsgemäße Schaltungsanordnung eine Stromsteuerung der Bildröhre vornimmt, bei der der Kathodenstrom linear eine entsprechende Bildhelligkeit zur Folge hat, muß die Vorentzerrung des Bildsignals rückgängig gemacht werden. Dafür ist in der Schaltungsanordnung gemäß Fig. 1 eine Kompensationsschaltung 3 vorgesehen, die eben diese Vorentzerrung des Bildsignals rückgängig macht.
Oben wurde erläutert, daß dazu eine Stufe mit einer nichtlinearen Kennlinie entsprechend **y = x$^\gamma$** erforderlich ist. Da gilt:

$$x^{\gamma} = e^{(\gamma \bullet lnx)}$$

läßt sich diese Nichtlinearität entsprechend dem Blockschaltbild der Kompensationsschaltung 3 in Fig. 1 zunächst durch Logarithmierung des Eingangssignals mittels eines Logarithmierers 4, einem nachfolgenden Verstärker 5 sowie einer Schaltungsanordnung 6 zur Bildung der Exponentialfunktion vornehmen lassen. Damit gelingt es, mittels der Elemente 4 bis 6 die Nichtliniarität des Bildsignales rückgängig zu machen, so daß die Kompensationsschaltung 3 an ihrem Ausgang 7 ein lineares Bildsignal liefert, das einer ebenfalls linear arbeitenden gesteuerten Stromquelle zugeführt wird, die dieses Signal ausgangsseitig über einen Schutzwiderstand 9 einer Kathode 10 der Bildröhre aufprägt. Damit wird dieser Kathode das liniarisierte Bildsignal aufgeprägt, das einen entsprechend linearen Helligkeitsverlauf in der Darstellung des Bildes zur Folge hat, da die dargestellte Bildhelligkeit in linearer Weise von dem Strahlstrom, der der Kathode 10 aufgeprägt wird, abhängt.
Die Bildröhre 1 weist jedoch eine parasitäre Eingangskapazität auf, die in der Fig. 1 symbolisch durch eine extern angeordnete Kapazität 11 dargestellt ist. Bei jeder Änderung des Bildinhaltes, also jeder Änderung des der Kathode 10 aufgeprägten Stromes der Bildröhre muß diese Eingangskapazität entsprechend umgeladen werden. Bei schnellen Änderungen des Bildinhaltes sind sehr schnelle und gegebenenfalls starke Stromänderungen erforderlich, die durch die erforderliche Umladung der Kapazität 11 gebremst werden. Dieser Einfluß der parasitären Eingangskapazität 11 wird dadurch kompensiert, daß eine gesteuerte Kompensations-Stromquelle 12 vorgesehen ist, welcher eingangsseitig das Bildsignal 2 zugeführt ist, das gemäß der schematischen Darstellung in Fig. 1 mittels einer Kapazität 13 differenziert wird. In Abhängigkeit dieses differenzierten Bildsignals prägt die Kompensations-Stromquelle 12 über den Schutzwiderstand 9 der Kathode 10 der Bildröhre 1 einen Kompensationsstrom auf, der die parasitäre Eingangskapazität 11 umlädt. Dieser Strom ist unmittelbar abhängig von dem Bildinhalt, so daß dieser Strom durch Dimensionierung der Kapazität 13 und der Kompensations-Stromquelle 12 so gewählt werden kann, daß er gerade den erforderlichen Umladestrom für die Kapazität 11 darstellt. Damit ist dann der Strom, den die Stromquelle 8 liefert, in unverfälschter Weise der Kathode 10 der Bildröhre 1 aufgeprägt, ohne daß sich die parasitäre Eingangskapazität 11 bemerkbar macht.

Diese Schaltungsanordnung weist trotz einfachem Aufbaus eine große Bandbreite auf und gestattet eine unmittelbare Stromsteuerung der Kathode 10 der Bildröhre 1.

In Fig. 2 ist ein Blockschaltbild einer Schaltungsanordnung gemäß der zweiten Ausführungsform der Erfindung dargestellt, wobei mit gleicher Bezifferung wie in der Schaltungsanordnung gemäß Fig. 1 dargestellte Bauelemente gleiche Funktionsweise haben.

Für die Darstellung gemäß Fig. 2 wird davon ausgegangen, daß der Schaltungsanordnung an ihrem Eingang 2 ein Bildsignal mit linearer Kennlinie zugeführt wird, wie dies beispielsweise Computer, Textgeneratoren oder auch D/A-Umsetzer liefern. Dieses lineare Bildsignal kann unmittelbar zur Ansteuerung der gesteuerten Stromquelle 8 eingesetzt werden, da hier keinerlei Nichtlinearitäten rückgängig zu machen sind. Der von der gesteuerten Stromquelle 8 gelieferte Strom gelangt über den Schutzwiderstand 9 auf die Kathode 10 und erzeugt damit eine Bilddarstellung mit linearem Helligkeitsverlauf.

Auch in dem Ausführungsbeispiel gemäß Fig. 2 ist die parasitäre Eingangskapazität 11 der Bildröhre in Abhängigkeit des Bildinhaltes umzuladen. Dazu ist eine Vorentzerrungsschaltung 21 vorgesehen, die zur Erzeugung der Funktion $y = e^{(1/\gamma \cdot \ln x)}$ einen Logarithmierer 22, einen Verstärker 23 sowie eine Schaltung 24 zur Erzeugung der Exponentialfunktion aufweist. Durch diese Vorentzerrungsschaltung 21 wird das zunächst lineare Bildsignal in einer Weise vorentzerrt, daß es an sich die Nichtlinearität der Spannungs-/Strom-Kennlinie der Bildröhre 1 kompensieren würde, ausgangsseitig liefert die Schaltungsanordnung 21 also ein Bildsignal, mit einer Vorentzerrung, wie sie üblicherweise von Senderanstalten gelieferten Bildsignale aufweisen. Dieses Bildsignal wird in gleicher Weise wie in der Darstellung gemäß Fig. 1 differenziert und über eine gesteuerte Kompensations-Stromquelle ebenfalls dem Eingang der Bildröhre 1 aufgeprägt. Dieser zusätzlich aufgeprägte Strom dient dazu, die parasitäre Eingangskapazität 11 in Abhängigkeit des Bildinhaltes umzuladen, so daß der von der Stromquelle 8 gelieferte Strom ohne Störeinflüsse unmittelbar den Kathodenstrom der Bildröhre 1 erzeugt.

Fig. 3 zeigt eine Abwandlung der Schaltungsanordnung gemäß Fig. 2, bei der die zunächst angenommene spannungsgesteuerte Stromquelle 12 durch zwei Stromquellen 31 und 32 ersetzt wurde.

In der Schaltungsanordnung gemäß Fig. 2 muß die gesteuerte Stromquelle 12 zur Umwandlung der Kapazität 11 Ströme beider Polaritäten liefern können. Für praktische Realisierungen ist dies problematisch. Daher ist in der Anordnung gemäß Fig. 3 diese zunächst ideal angenommene Stromquelle 12 der Schaltungsanordnung gemäß Fig. 2 durch zwei Stromquellen 31 und 32 ersetzt worden, die ausschließlich Ströme einer Polarität liefern müssen und damit leichter zu realisieren sind.

Dabei liefert die Stromquelle 32 einen konstanten Strom, während die Stromquelle 31 in Abhängigkeit des mit einer nichtlinearen Kennlinie beaufschlagten Bildsignals steuerbar ist.

Dabei sind die Stromquellen 31 und 32 so dimensioniert, daß immer dann, wenn keine Änderung des Bildinhaltes erfolgt, beide Stromquellen den gleichen Strom liefern, so daß dieser Strom von der Stromquelle 31 über die Stromquelle 32 auf das Bezugspotential abfließt und kein Strom in die Bildröhre bzw. deren parasitäre Eingangskapazität 11 fließt. Bei einer Änderung des Bildinhaltes jedoch liefert die Stromquelle 31 einen sich ändernden Strom, wohingegen die Stromquelle 32 weiterhin den konstanten Strom liefert. Damit ist die Stromsumme beider Stromquellen nicht mehr gleich, so daß ein Differenzstrom zu der bzw. von der parasitären Eingangskapazität 11 fließt. Dieser Strom dient der Umladung dieser Eingangskapazität in Abhängigkeit des Bildsignals.

**Patentansprüche**

1. Schaltungsanordnung zur Ansteuerung einer Bildröhre (1) mit nichtlinearer Spannungs-/Strom-Kennlinie mit einem Bildsignal, das zur Kompensation der nichtlinearen Kennlinie der Bildröhre (1) vorentzerrt ist, worin das Bildsignal einer nichtlinearen Kompensationsschaltung (3) zugeführt wird, die die Vorentzerrung des Bildsignals rückgängig macht und die ausgangsseitig eine gesteuerte Stromquelle (8) ansteuert, deren Ausgang mit der Kathode (10) der Bildröhre (1) gekoppelt ist, und worin ein Differenzierer (13) vorgesehen ist, der das Bildsignal differenziert und eine gesteuerte Kompensations-Stromquelle (12) ansteuert, die zur bildsignalabhängigen Umladung der parasitären Eingangskapazität (11) der Bildröhre (1) mit deren Kathode (10) gekoppelt ist.

2. Schaltungsanordnung zur Ansteuerung einer Bildröhre (1) mit nichtlinearer Spannungs-/Strom-Kennlinie mit einem linearen, nicht vorentzerrten, Bildsignal, worin das Bildsignal einer gesteuerten Stromquelle (8) zugeführt wird, die ausgangsseitig mit der Kathode (10) der Bildröhre (1) gekoppelt ist, und worin das Bildsignal einer nichtlinearen Vorentzerrungsschaltung (21) zugeführt wird, die eine Vorentzerrung des Bildsignals mit einer nichtlinearen Kennlinie vornimmt, die die Nichtlinearität der Bildröhre kompensiert und deren Ausgangssignal auf einen Differenzierer (13) geführt ist, der eine gesteuerte Kompensations-Stromquelle (12) ansteuert, die ausgangsseitig zur bildsignalabhängigen Umladung der parasitären Eingangskapazität (11) der Bildröhre (1) mit deren Kathode (10) gekoppelt ist.

3. Schaltungsanordnung nach Anspruch 1,
   dadurch gekennzeichnet, daß die Kompensationsschaltung (3) eine Stufe mit nichtlinearer Kennlinie aufweist, die aus einem Eingangssignal x ein Ausgangssignal y gemäß der Gleichung

$$y = x^{\gamma}$$

generiert, wobei $\gamma$ die Nichtlinearität der Spannungs-/Strom-Kennlinie der Bildröhre (1) gemäß der Gleichung

$$U_{kath} = U_{sperr} - (K_1 \cdot I_{STR})^{\frac{1}{\gamma}}$$

angibt, worin $U_{sperr}$ die Sperrspannung der Bildröhre, $U_{kath}$ die Kathodenspannung, $I_{STR}$ der Strahlstrom und $K_1$ ein von der Bildröhre abhängiger konstanter Faktor sind.

4. Schaltungsanordnung nach Anspruch 2,
   dadurch gekennzeichnet, daß die Vorentzerrungsschaltung (21) eine Stufe mit nichtlinearer Kennlinie aufweist, die aus einem Eingangssignal x ein Ausgangssignal y gemäß der Gleichung

$$y = x^{1/\gamma}$$

generiert, wobei $\gamma$ die Nichtlinearität der Spannungs-/Strom-Kennlinie der Bildröhre (1) gemäß der Gleichung

$$U_{kath} = U_{sperr} - (K_1 \cdot I_{STR})^{\frac{1}{\gamma}}$$

angibt, worin $U_{sperr}$ die Sperrspannung der Bildröhre, $U_{kath}$ die Kathodenspannung, $I_{STR}$ der Strahlstrom und $K_1$ ein von der Bildröhre abhängiger konstanter Faktor sind.

5. Schaltungsanordnung nach einem der Ansprüche 1 bis 4,
   dadurch gekennzeichnet, daß die Kompensations-Stromquelle (12) aus zwei Stromquellen (31, 32) aufgebaut ist, die beide auf die Kathode (10) der Bildröhre (1) arbeiten und von denen je eine gegen ein positives und ein negatives Bezugspotential arbeitet, und daß wenigstens eine der beiden Stromquellen (31, 32) durch das Ausgangssignal des Differenzierers (13) steuerbar ist.

6. Bildwiedergabegerät mit einer Bildröhre, welche mittels einer Schaltungsanordnung nach einem der Ansprüche 1 bis 5 angesteuert wird.

7. Verfahren zur Ansteuerung einer Bildröhre (1) mit nichtlinearer Spannungs-/Strom-Kennlinie mit einem Bildsignal, das zur Kompensation der nichtlinearen Kennlinie der Bildröhre (1) vorentzerrt ist, worin die Vorentzerrung des Bildsignals rückgängig gemacht wird, in Abhängigkeit dieses nicht mehr vorentzerrten Bildsignals ein Strom erzeugt wird, der auf die Kathode der Bildröhre gekoppelt wird, das vorentzerrte Bildsignal differenziert wird und in Abängigkeit dieses differenzierten vorentzerrten Bildsignals ein Kompensationsstrom erzeugt wird, der zur bildsignalabhängigen Umladung der parasitären Eingangskapazität (11) der Bildröhre (1) auf deren Kathode (10) gekoppelt ist.

**8.** Verfahren zur Ansteuerung einer Bildröhre (1) mit nichtlinearer Spannungs-/Strom-Kennlinie mit einem linearen Bildsignal, worin in Abhängigkeit des Bildsignals ein Strom erzeugt wird, der mit der Kathode (10) der Bildröhre (1) gekoppelt ist, das Bildsignal mit einer nichtlinearen Kennlinie vorentzerrt wird, die die Nichtlinearität der Bildröhre kompensiert, dieses vorentzerrte Bildsignal differenziert wird und in Abhängigkeit dieses differenzierten vorentzerrten Bildsignals ein Strom erzeugt wird, der zur bildsignalabhängigen Umladung der parasitären Eingangskapazität (11) der Bildröhre (1) auf deren Kathode (10) gekoppelt ist.

**Claims**

**1.** A circuit arrangement for controlling a picture display tube (1) having a non-linear voltage/current characteristic by means of a picture signal which is precorrected for compensating the non-linear characteristic of the picture display tube (1), wherein the picture signal is applied to a non-linear compensation circuit (3) which cancels the precorrection of the picture signal and controls a controlled current source (8) at the output end, the output of said current source being coupled to the cathode (10) of the picture display tube (1), and wherein a differentiator (13) is provided which differentiates the picture signal and controls a controlled compensation current source (12) which is coupled to the cathode (10) of the picture display tube (1) for a picture signal-dependent reversal of the charge of the parasitic input capacitance (11) of said picture display tube.

**2.** A circuit arrangement for controlling a picture display tube (1) having a non-linear voltage/current characteristic by means of a linear, non-precorrected picture signal, wherein the picture signal is applied to a controlled current source (8) which is coupled to the cathode (10) of the picture display tube (1) at the output end, and wherein the picture signal is applied to a non-linear precorrection circuit (21) which precorrects the picture signal having a non-linear characteristic and compensates the non-linearity of the picture display tube, and whose output signal is applied to a differentiator (13) which controls a controlled compensation current source (12) which is coupled at the output end to the cathode (10) of the picture display tube (1) for a picture signal-dependent reversal of the charge of the parasitic input capacitance (11) of said picture display tube.

**3.** A circuit arrangement as claimed in claim 1, characterized in that the compensation circuit (3) has a stage with a non-linear characteristic, which generates an output signal y from an input signal x in accordance with the equation

$$y = x^{\gamma}$$

in which $\gamma$ represents the non-linearity of the voltage/current characteristic of the picture display tube (1) in accordance with the equation

$$U_{kath} = U_{sperr} - (K_1 \cdot I_{STR})^{\frac{1}{\gamma}}$$

in which $U_{sperr}$ represents the cut-off voltage of the picture display tube, $U_{kath}$ represents the cathode voltage, $I_{STR}$ represents the beam current, and K, represents a constant factor dependent on the picture display tube.

**4.** A circuit arrangement as claimed in claim 2, characterized in that the precorrection circuit (21) has a stage with a non-linear characteristic, which generates an output signal y from an input signal x in accordance with the equation

$$y = x^{1/\gamma}$$

in which $\gamma$ represents the non-linearity of the voltage/current characteristic of the picture display tube (1) in accordance with the equation

$$U_{kath} = U_{sperr} - (K_1 \cdot I_{STR})^{\frac{1}{\gamma}}$$

in which $U_{sperr}$ represents the cut-off voltage of the picture display tube, $U_{kath}$ represents the cathode voltage, $I_{STR}$ represents the beam current, and $K_1$ represents a constant factor dependent on the picture display tube.

5. A circuit arrangement as claimed in any one of claims 1 to 4, characterized in that the compensation current source (12) consists of two current sources (31, 32) both of which operate on the cathode (10) of the picture display tube (1) and one of which operates against a positive reference potential and the other operates against a negative reference potential, and in that at least one of the two current sources (31, 32) is controllable by means of the output signal of the differentiator (13).

6. A picture display device including a picture display tube which is controlled by means of a circuit arrangement as claimed in any one of claims 1 to 5.

7. A method of controlling a picture display tube (1) having a non-linear voltage/current characteristic by means of a picture signal which is precorrected for compensating the non-linear characteristic of the picture display tube (1), wherein the precorrection of the picture signal is cancelled, in dependence upon said picture signal which is no longer precorrected, a current is generated which is coupled to the cathode of the picture display tube, the precorrected picture signal is differentiated and, in dependence upon said differentiated precorrected picture signal, a compensation current is generated which is coupled to the cathode (10) of the picture display tube (1) for a picture signal-dependent reversal of the charge of the parasitic input capacitance (11) of said picture display tube.

8. A method of controlling a picture display tube (1) having a non-linear voltage/current characteristic by means of a linear picture signal, wherein in dependence upon the picture signal, a current is generated which is coupled to the cathode (10) of the picture display tube (1), the picture signal having a non-linear characteristic is precorrected, which compensates the non-linearity of the picture display tube, said precorrected picture signal is differentiated and, in dependence upon said differentiated precorrected picture signal, a current is generated which is coupled to the cathode (10) of the picture display tube (1) for a picture signal-dependent reversal of the charge of the parasitic input capacitance (11) of said picture display tube.

**Revendications**

1. Circuit d'excitation d'un tube-image (1) avec une caractéristique tension/courant non linéaire avec un signal d'image qui est préaccentué en vue de la compensation de la caractéristique non linéaire du tube-image (1) dans lequel le signal d'image est amené à un circuit de compensation (3) non linéaire qui annule la préaccentuation du signal d'image et qui excite côté sortie une source de courant commandée (8) dont la sortie est couplée à la cathode (10) du tube-image (1) et dans lequel est prévu un différenciateur (13) qui différencie le signal d'image et excite une source de courant (12) de compensation commandée qui est couplée, en vue de l'inversion de charge dépendant du signal d'image de la capacité d'entrée parasitaire (11) du tube-image (1), avec sa cathode (10).

2. Circuit d'excitation d'un tube-image (1) avec une caractéristique tension/courant non linéaire avec un signal d'image non préaccentué linéaire, dans lequel le signal d'image est amené à une source de courant commandée (8) qui est couplé côté sortie à la cathode (10) du tube-image et dans lequel le signal d'image est amené à un circuit de préaccentuation non linéaire (21) qui effectue une préaccentuation du signal d'image avec une caractéristique non linéaire qui compense la non-linéarité du tube-image et dont le signal de sortie est amené à un différenciateur (13) qui excite une source de courant de compensation commandée (12) qui est couplée côté sortie, en vue de l'inversion de charge dépendant du signal d'image de la capacité d'entrée parasitaire (11) du tube-image (1), avec sa cathode (10).

3. Circuit selon la revendication 1, caractérisé en ce que le circuit de compensation (3) présente un étage avec une caractéristique non linéaire qui génère à partir d'un signal d'entrée x un signal de sortie y conformément à l'équation

$$y = x^{\gamma},$$

représentant la non-linéarité de la caractéristique tension/courant du tube-image conformément à l'équation:

$$U_{kath} = U_{sperr} - (K_1 \cdot I_{STR})^{1/\gamma}$$

dans laquelle $U_{sperr}$ représente la tension de blocage du tube-image, Ukath la tension de cathode, ISTR le courant de faisceau et $K_1$ un facteur constant dépendant de l'image.

4. Circuit selon la revendication 2, <u>caractérisé en ce</u> que le circuit de préaccentuation (21) présente un étage avec une caractéristique non linéaire qui génère à partir d'un signal d'entrée x un signal de sortie y conformément à l'équation $y = x^{1/\gamma}$, $\gamma$ représentant la non-linéarité de la caractéristique tension/courant du tube-image (1) conformément à l'équation:

$$y = x^{1/\gamma},$$

représentant la non-linéarité de la caractéristique tension/courant du tube-image conformément à l'équation:

$$U_{kath} = U_{sperr} - (K_1 \cdot I_{STR})^{1/\gamma}$$

dans laquelle $U_{sperr}$ représente la tension de blocage du tube-image, Ukath la tension de cathode, ISTR le courant de faisceau et $K_1$ un facteur constant dépendant de l'image.

5. Circuit selon l'une des revendications 1 à 4, <u>caractérisé en ce</u> que la source de courant de compensation (12) est composée de deux sources de courant (31, 32) qui travaillent toutes deux sur la cathode (10) du tube-image (1) et dont l'une travaille respectivement à un potentiel de référence positif et l'autre à un potentiel de référence négatif et qu'au moins une des deux sources de courant (31, 32) peut être commandée par le signal de sortie du différenciateur (13).

6. Appareil de reproduction d'images avec un tube-image qui est excité à l'aide d'un circuit selon l'une des revendications 1 à 5.

7. Procédé d'excitation d'un tube-image (1) avec une caractéristique de tension/courant non linéaire avec un signal d'image qui est préaccentué en vue de la compensation de la caractéristique non linéaire du tube-image (1), dans lequel la préaccentuation du signal d'image est annulée, en fonction de ce signal d'image qui n'est plus préaccentué, il est produit un courant qui est couplé à la cathode du tube-image, le signal d'image préaccentué différencié et, en fonction de ce signal d'image préaccentué différencié, un courant de compensation est produit et couplé en vue de l'inversion de charge dépendant du signal d'image de la capacité d'entrée parasitaire (11) du tube-image (1) sur sa cathode (10).

8. Procédé d'excitation d'un tube-image (1) avec une caractéristique de tension/courant non linéaire avec un signal d'image linéaire, dans lequel, en fonction du signal d'image, il est produit un courant qui est couplé à la cathode (10) du tube-image (1), le signal d'image est préaccentué avec une caractéristique non linéaire qui compense la non-linéarité du tube-image, ce signal d'image préaccentué est différencié et, en fonction de ce signal d'image préaccentué différencié, il est produit un courant qui est couplé en vue de l'inversion de charge dépendant du signal d'image de la capacité d'entrée parasitaire (11) du tube-image (1) sur sa cathode (10).

FIG. 1

FIG. 2

FIG. 3